Europäisches Patentamt

European Patent Office

Office européen des brevets

(11) Veröffentlichungsnummer : **0 034 579**
**B1**

(12) # EUROPÄISCHE PATENTSCHRIFT

(45) Veröffentlichungstag der Patentschrift :
13.07.83

(21) Anmeldenummer : 81890018.5

(22) Anmeldetag : 30.01.81

(51) Int. Cl.³ : **C 22 B 21/00, C 22 B 7/00**

(54) **Verfahren und Einrichtung zur Behandlung von Abstrichen und flüssiger Krätze.**

(30) Priorität : 18.02.80 AT 870/80

(43) Veröffentlichungstag der Anmeldung :
26.08.81 Patentblatt 81/34

(45) Bekanntmachung des Hinweises auf die Patenterteilung : 13.07.83 Patentblatt 83/28

(84) Benannte Vertragsstaaten :
CH DE FR GB IT LI

(56) Entgegenhaltungen :
DD A 37 740
DE A 2 713 281
DE B 2 200 490
US A 2 754 199
US A 3 037 711
US A 3 417 930
US A 4 097 027

(73) Patentinhaber : **WAAGNER-BIRO AKTIENGESELL-
SCHAFT**
**Stadlauer-Strasse 54**
**A-1221 Wien (AT)**

(72) Erfinder : **Weiss, Anton**
**Margaretenstrasse 142/16**
**A-1050 Wien (AT)**

Verfahren und Einrichtung zur Behandlung von Abstrichen und flüssiger Krätze

Die Erfindung betrifft ein Verfahren zur Behandlung von Abstrichen und flüssiger Krätze, die bei Er- und Umschmelzanlagen anfallen und vom Schmelzofen in eine Abkrätzmulde abgegossen werden, wobei die Krätze aus der Abkrätzmulde in ein rotierendes, im wesentlichen horizontal angeordnetes, Kühlrohr befördert wird, dessen innere Oberfläche zum Teil mit Krätze benetzt wird, und das Kühlrohr von einem Ende zum gegenüberliegenden Ende durchwandert, hiebei zumindest an der Oberfläche unter dem Schmelzpunkt abgekühlt, insbesondere granuliert, wird, sowie eine Einrichtung zur Durchführung des Verfahrens.

Es ist bekannt, daß Abstriche und flüssige Krätze die bei der Metaller- und Umschmelzung anfallen, einen hohen Prozentsatz von reinem Metall beinhalten. Zu diesem Zweck werden die genannten Abfälle gesammelt und eigenen Wiedergewinnungsanlagen zugeführt. Es wird hiebei gemäß der DE-A 27 13 281, die heiße Aluminiumkrätze in eine rotierende, offene Kühltrommel eingefüllt und in dieser abgekühlt. Die Abkühlung und Umwälzung der Krätze in einer offenen Trommel bewirkt die Verbrennung eines Teiles des metallischen Aluminiums durch Luftzufuhr. Dies bewirkt einerseits eine Temperaturerhöhung der Krätze, die durch erhöhte Kühlwirkung ausgeglichen werden muß. Andererseits tritt ein erhöhter Aluminiumverlust durch die Verbrennung auf. Da das Aluminiumoxyd einen bedeutend geringeren Handelswert als Aluminium aufweist, ist auch die Wirtschaftlichkeit der Anlage beeinflußt.

Die vorliegende Erfindung hat es sich zur Aufgabe gestellt, die Rückgewinnung des metallischen Aluminiums bzw. der verwandten Metalle, wie Zink oder Blei, zu verbessern. Die Kühlung der heißen, flüssigen Krätze erfolgt unter Luftabschluß, vorzugsweise unter Inertgasatmosphäre. Gleichzeitig wird die Anlagengröße verkleinert, sodaß die Rückgewinnungsanlage möglichst in Nähe des Anfallortes errichtet werden kann. Darüberhinaus wird eine Produktverbesserung durch die Trennung der Kühl- von der Mahlphase erreicht, indem sich das metallische Produkt in der körnigen Phase anreichert, während im Staub, bzw. in der feinkörnigen Phase der Großteil der Oxyde und anderen Verunreinigungen zu finden sind. Eine weitere Verbesserung wird durch die Entstaubung der Siebstation erreicht, indem der oxydreiche Feinstaub von den anderen Fraktionen getrennt wird.

Die erfindungsgemäße Aufgabe wird dadurch gelöst, daß die Kühlung der Krätze unter Luftabschluß oder unter Inertgasatmosphäre erfolgt, worauf die granulierte Krätze anschließend einem autogenen Mahlprozeß unterworfen und anschließend in ein Metallgranulat und eine, im wesentlichen staubförmiges Metalloxyd enthaltende, feinkörnige Fraktion getrennt wird. Weitere erfindungsgemäße Verfahrensmerkmale sind in den Unteransprüchen 2-5 angegeben.

Die erfindungsgemäße Einrichtung zur Durchführung des Verfahrens ist dadurch gekennzeichnet, daß das Kühlrohr im Inneren einer Autogenmühle angeordnet ist und daß an der Eintrittsseite des Kühlrohres eine Haube und eine Einrichtung zur dichtenden Verbindung der Abkrätzmulde mit der Haube vorgesehen ist. Weitere erfindungsgemäße Merkmale sind in den Unteransprüchen 7-15 angeführt.

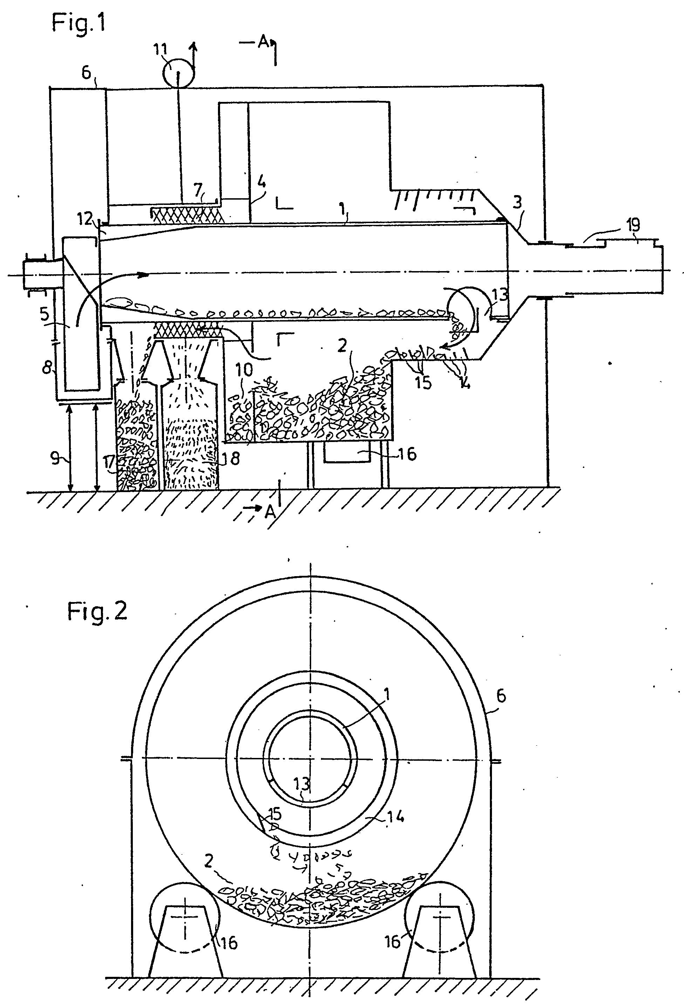

Die Erfindung ist in den Figuren 1 und 2, aufgrund eines Ausführungsbeispieles einer Aluminiumkrätzen-Behandlungseinrichtung, schematisch dargestellt.

Es zeigen Fig. 1 einen Aufriß der Behandlungseinrichtung und Fig. 2 einen Schnitt gemäß Schnittlinie A in Fig. 1.

Die erfindungsgemäße Behandlungseinrichtung für Abstriche und flüssige Krätze umfaßt ein zentral angeordnetes Kühlrohr 1, in welches die flüssige Krätze aus einer Abkrätzmulde 8, mittels eines Schöpfwerkes 5 eingebracht wird. Zu dieser Behandlungseinrichtung gehört als Nebeneinrichtung ein Hubtisch 9, auf welchem die Abkrätzmulde 8 mittels eines Gabelstaplers gebracht und gegen die Dichteinrichtung der Haube 6, während der Abschöpfung der Krätze, gepreßt wird, sodaß der Lufteintritt in das Kühlrohr weitestgehend behindert wird. Diese Behinderung bewirkt, daß während der Auflockerung der Krätze in der Kühltrommel das Aluminium nicht weiter verbrennt und kein weiterer Temperaturanstieg auftritt. Das Schöpfwerk 5 besteht im wesentlichen aus zwei schaufelförmigen Armen, die die flüssige Krätze abwechselnd heben und in Richtung ihrer Drehachse, zum Eingang des Kühlrohres 1, leiten. Zur Unterstützung der Vorwärtsbewegung der Krätze im horizontal angeordneten Kühlrohr, ist ein Einlaufkonus 12 vorgesehen, dessen Neigung in Bewegungsrichtung der Krätze angeordnet ist. Durch diese Maßnahme wird das Zurückfallen der Krätze aus dem Kühlrohr in die Abkrätzmulde 8 verhindert. Das Kühlrohr 1 ist doppelwandig ausgebildet. Zwischen der Doppelwandung wird eine Kühlflüssigkeit, z. B. Wasser, geführt. Das Kühlrohr 1 wird ständig gedreht, sodaß die Krätze, ähnlich wie bei einer Autogenmühle, nur einen Teil des kreisförmigen Querschnittes des Kühlrohres benetzt und durch das eigene Gewicht nach vorne gedrückt wird. Während dieser Bewegung wird die Krätze durch den Kontakt mit der Wand abgekühlt und schließlich in granulierter Form durch die Ausgangsöffnung 13 in den Einlauf 14 der Autogenmühle 2 geführt. Zur Durchführung des Horizontaltransportes der Krätze weist der Einlauf 14 etwa schraubenförmig angeordnete Stege 15 auf, die sicherstellen, daß ein Teil der granulierten Krätze immer im Einlaufteil gehalten wird, wodurch eine einfache Abdichtung gegeben ist. Die Autogenmühle weist in ihrer einfachsten Form, zusammen mit dem Kühlrohr 1, einen gemeinsamen Antrieb 16 auf, wobei die beiden Bauteile mit gleicher Drehzahl rotieren. Die Autogenmühle bewirkt durch das ständige Drehen und Mischen, ein Abschleifen und Zerschlagen der festen Krätzepartikel und erzeugt eine Staubfraktion, sowie ein Granulat mit vorgegebenem Korngrößenspektrum. Da sich die größeren Partikel am größeren Umfang der Autogenmühle ablagern, ist der Ablauf feinkörnig und kann durch eine Austragsvorrichtung 10, ähnlich dem Schöpfwerk 5, in eine Siebstation 7 gebracht werden, die mit dem Mühlenantrieb fest verbunden ist. Die Siebstation teilt das ausgetragene Gut in eine grobkörnige Fraktion 17 und eine feinkörnige Fraktion 18. Die grobkörnige Fraktion 17 beihaltet nahezu reines Aluminiummetall, während die feinkörnige Fraktion 18 den Hauptteil der Aluminiumoxyde, bzw. anderer staubförmiger Verunreinigungen, beinhaltet. Die Siebstation 7 wird während des Betriebes durch die Staubabsaugung 11 entlüftet, wodurch der Staubgehalt der Fraktion 18 vermindert und der relative Gehalt an Aluminiummetall erhöht werden kann.

Das Kühlrohr 1 kann aber auch einen getrennten Antrieb aufweisen, sodaß die Drehung unabhängig von der Autogenmühle 2 erfolgt. Zu diesem Zweck ist das Kühlrohr 1 an den Stirnwänden 3 und 4 der Autogenmühle 2 in eigenen Rollenlagern drehbar gelagert. Beide Einrichtungen können somit die optimale Drehzahl aufweisen. Die gegenseitige Abhängigkeit der Durchmesser wird beseitigt.

Die Behandlungseinrichtung kann ferner, an der dem Schöpfwerk 5 gegenüberliegenden Seite, eine Eingabeeinrichtung 19 für bereits abgekühlte Krätze aufweisen, die dann entsprechend der gewünschten Körnung zerkleinert wird. Die Eingabeeinrichtung 19 ist während des Kühlbetriebes luftdicht verschlossen, sodaß kein Luftaustausch erfolgen kann. Wesentlich ist, daß flüssige Krätze unter Luftabschluß rasch abgekühlt wird. Schätzt man das Trommelvolumen des Kühlrohres mit den daran angeschlossenen Einrichtungen auf etwa 2 Kubikmeter, beinhaltet dieses Volumen etwa 800 g Sauerstoff, mit denen etwa 1 kg metallisches Aluminium oxydiert werden kann. Dies entspricht bei einer Charge von 300 kg Krätze mit etwa 50 % Aluminiumgehalt einem Abbrandverlust von weniger als 1 %, der praktisch bedeutungslos ist. Es ist wesentlich, daß das Kühlrohr 1, im Einlaufbereich der flüssigen Krätze innen glatt ist und keine Einbauten aufweist, sodaß sich die Krätze an diesen Einbauten nicht festsetzen kann. Beim Betrieb derartiger Kühltrommeln wurde ein Selbstglättungseffekt festgestellt, nach welchem sich in relativ kurzer Zeit eine dünne Aluminiumhaut auf. der Rohrwandung bildet, die ein weiteres Anbacken des Aluminiums verhindert.

In Fig. 2 ist zur Vervollständigung der Fig. 1 ein Schnitt gemäß Schnittlinie A dargestellt. Die Austragöffnung 13 des Kühlrohres, weist einen Durchtritt auf, der die maximale Korngröße der Krätze begrenzt. Werden größere Stücke aufgegeben, müssen dieselben auf andere Art und Weise zerkleinert werden. Der schraubenförmige Steg des Einlaufes 14 der Autogenmühle 2 besteht nur aus einem Stück und bewirkt den Vortrieb der Krätzekörner. Der Antrieb der Mühle erfolgt über die beiden Rollen 16, auf welchen der gesamte, drehbare Bauteil, bestehend aus Mühle, Siebstation und Kühlrohr, drehbar gelagert ist. Beide Rollen 16 werden durch einen gemeinsamen, nicht dargestellten, Motor angetrieben.

**Ansprüche**

1. Verfahren zur Behandlung von Abstrichen und flüssiger Krätze, die bei Er- und Umschmelzanlagen, insbesondere in einer Aluminiumhütte anfallen und vom Schmelzofen in eine Abkrätzmulde abgegossen werden, wobei die Krätze aus der Abkrätzmulde in ein rotierendes, im wesentlichen horizontal angeordnetes, Kühlrohr befördert wird, dessen innere Oberfläche zum Teil mit Krätze benetzt wird und das Kühlrohr von einem Ende zum gegenüberliegenden Ende durchwandert, hiebei zumindest an der Oberfläche unter dem Schmelzpunkt abgekühlt, insbesondere granuliert, wird, dadurch gekennzeichnet, daß diese Verfahrensschritte unter Luftabschluß oder unter Inertgasatmosphäre erfolgen, worauf die granulierte Krätze anschließend einem autogenen Mahlprozeß unterworfen und anschließend in ein Metallgranulat und eine, im wesentlichen staubförmiges Metalloxyd enthaltende, feinkörnige Fraktion getrennt wird.

2. Verfahren nach Anspruch 1, dadurch gekennzeichnet, daß die Krätze mittels eines Schöpfwerkes in das Kühlrohr eingebracht wird.

3. Verfahren nach Anspruch 1, dadurch gekennzeichnet, daß die gekühlte Krätze als Verschlußmedium zwischen Kühlrohr und Mahltrommel fungiert.

4. Verfahren nach Anspruch 1, dadurch gekennzeichnet, daß die Kühlung intermittierend, insbesondere während der Krätzeaufgabe, erfolgt.

5. Verfahren nach Anspruch 1, dadurch gekennzeichnet, daß während des Absiebens ein Teil des Feinstaubes durch Absaugung abgezogen wird.

6. Einrichtung zur Durchführung des Verfahrens nach mindestens einem der Ansprüche 1-5, dadurch gekennzeichnet, daß das Kühlrohr (1) im Inneren einer Autogenmühle (2) angeordnet ist und daß an der Eintrittsseite des Kühlrohres (1) eine Haube (6) und eine Einrichtung zur dichtenden Verbindung der Abkrätzmulde (8) mit der Haube (6) vorgesehen ist.

7. Einrichtung nach Anspruch 6, dadurch gekennzeichnet, daß das Kühlrohr (1) koaxial zur Autogenmühle (2) angeordnet ist und in den Stirnwänden (3, 4) der Autogenmühle gelagert ist.

8. Einrichtung nach Anspruch 6 oder 7, dadurch gekennzeichnet, daß das Kühlrohr (1), relativ zur Autogenmühle (2), drehbar gelagert ist und einen eigenen Antrieb aufweist.

9. Einrichtung nach Anspruch 6, dadurch gekennzeichnet, daß das Kühlrohr (1) von einem wassergekühlten Doppelmantel gebildet ist und an der Innenseite zumindest eintrittsseitig eine glatte Innenwandung aufweist.

10. Einrichtung nach Anspruch 6, dadurch gekennzeichnet, daß das Kühlrohr (1) eintrittsseitig mit einem Schöpfwerk (5) verbunden ist.

11. Einrichtung nach Anspruch 6, dadurch gekennzeichnet, daß die Abkrätzmulde während der Krätzeentnahme gegen die Haube (6), insbesondere deren Einrichtung, zur dichtenden Verbindung mit der Abkrätzmule, gedrückt ist.

12. Einrichtung nach Anspruch 6, dadurch gekennzeichnet, daß das Kühlrohr (1) einen Einlaufkonus in Transportrichtung der Krätze aufweist.

13. Einrichtung nach Anspruch 6, dadurch gekennzeichnet, daß das Kühlrohr (1) mit der Autogenmühle (2) starr verbunden ist und mit dieser einen gemeinsamen Antrieb aufweist.

14. Einrichtung nach Anspruch 6, dadurch gekennzeichnet, daß die Autogenmühle (2) in ihrer Verlängerung einen als Siebstation (7) ausgebildeten, koaxialen Austragstutzen mit geringerem Durchmesser als die Autogenmühle (2) aufweist.

15. Einrichtung nach Anspruch 6, dadurch gekennzeichnet, daß an der Siebstation (9) eine Staubabsaugung (11) angeschlossen ist.


## Claims

1. Process for the treatment of scums and liquid dross, which arise in smelting and re-melting plants, in particular in an aluminium smelter, and are transferred from the smelting furnace into a dross removal through, the dross being transferred from said through into a rotating cooling pipe, which is arranged substantially horizontally and the inner surface of which is partially wetted by the dross, and the dross migrating through the cooling pipe from one end to the other end and being cooled, at least on the surface, to a temperature below the melting point, of the metal in the dross to form said metal into granulated particles, characterized in that said steps are carried out with exclusion of air or under an inert gas atmosphere, whereupon the granulated particles are subjected to autogenous grinding and the result product is subsequently separated into metal granules and a finegrained fraction which contains substantially dusty metal oxide.

2. Process according to claim 1, characterized in that the dross is introduced into the cooling pipe by means of a scoop mechanism.

3. Process according to claim 1, characterized in that the cooled dross acts as a sealing medium between the cooling pipe and the grinding drum.

4. Process according to claim 1, characterized in that cooling takes place intermittently, particularly during the charging of the dross.

5. Process according to claim 1, characterized in that a part of the dusty metal oxide is extracted by exhausting during screening.

6. Apparatus for carrying out the process according to at least one of claims 1 to 5, characterized in that the cooling pipe (1) is arranged in the interior of an autogenous mill (2), the cooling pipe (1) having a hood (6) at its inlet end and a member to form a seal connection between the dross removal through (8) and the hood (6).

7. Apparatus according to claim 6, characterized in that the cooling pipe (1) is located coaxially to the autogenous mill (2) and is mounted in the end walls (3, 4) of said mill.

8. Apparatus according to claim 6 or 7, characterized in that the cooling pipe (1) is mounted for rotation relative to the autogenous mill (2) and is provided with its own drive means.

9. Apparatus according to claim 6, characterized in that the cooling pipe (1) is provided with a water-cooled double jacket and has a smooth inner wall, at least at the inlet end.

10. Apparatus according to claim 6, characterized in that the cooling pipe (1) is connected on the inlet end to a scoop mechanism (5).

11. Apparatus according to claim 6, characterized by the fact that, while dross is taken out, the dross removal through is pressed against the hood (6), particularly against the hood apparatus, so as to form a seal connection with the dross removal through (8).

12. Apparatus according to claim 6, characterized in that the cooling pipe (1) is provided with an inlet cone in the direction of dross transport.

13. Apparatus according to claim 6, characterized in that the cooling pipe (1) is rigidly joined to the autogenous mill (2) and has a drive which is common with the latter.

14. Apparatus according to claim 6, characterized in that the autogenous mill (2) has a coaxial discharge nozzle forming a screening station (7), said nozzle having a diameter which is smaller than that of the mill (2).

15. Apparatus according to claim 6, characterized in that a dust exhaustion system (11) is connected to the screening station (9).


## Revendications

1. Procédé pour le traitement d'écumes et de crasses liquides qui se produisent dans des installations d'élaboration par fusion et de refonte, en particulier dans une fonderie d'aluminium et sont déversées depuis le four de fusion dans une auge de décrassage, auquel cas les crasses, provenant de l'auge de décrassage, sont amenées dans un tube refroidisseur rotatif disposé sensiblement horizontalement, dont la surface interne est mouillée en partie par des crasses et parcourent le tube refroidisseur depuis une extrémité jusqu'à l'extrémité opposée, y sont refroidies au moins à la surface en dessous du point de fusion et en particulier granulées, caractérisé en ce que ces opérations de procédé s'effectuent à l'abri de l'air ou sous atmosphère de gaz inerte, après quoi les crasses granulées sont ensuite soumises à un processus de broyage autogène et séparées subséquemment en un granulat métallique et en une fraction à grains fins contenant de l'oxyde métallique sensiblement pulvérulent.

2. Procédé selon la revendication 1, caractérisé en ce que les crasses sont introduites dans le tube refroidisseur au moyen d'un mécanisme élévateur-puiseur.

3. Procédé selon la revendication 1, caractérisé en ce que les crasses refroidies agissent comme moyen d'obturation entre tube refroidisseur et tambour de broyage.

4. Procédé selon la revendication 1, caractérisé en ce que le refroidissement a lieu de façon intermittente, en particulier pendant le chargement des crasses.

5. Procédé selon la revendication 1, caractérisé en ce que, pendant le criblage, une partie de la poussière fine est retirée par aspiration.

6. Système pour l'exécution du procédé selon au moins l'une des revendications 1 à 5, caractérisé en ce que le tube refroidisseur (1) est disposé à l'intérieur d'un broyeur autogène (2) et en ce que sur le côté d'entrée du tube refroidisseur (1) sont prévus un capot (6) et un système pour la liaison étanche de l'auge de décrassage (8) avec le capot (6).

7. Système selon la revendication 6, caractérisé en ce que le tube refroidisseur (1) est disposé coaxialement au broyeur autogène (2) et est monté dans les parois frontales (3, 4) du broyeur autogène.

8. Système selon la revendication 6 ou 7, caractérisé en ce que le tube refroidisseur (1) est monté de façon tournante relativement au broyeur autogène (2) et comporte une commande d'entraînement propre.

9. Système selon la revendication 6, caractérisé en ce que le tube refroidisseur (1) est constitué par une double enveloppe refroidie par eau et présente, du côté intérieur, une paroi interne lisse au moins du côté d'entrée.

10. Système selon la revendication 6, caractérisé en ce que le tube refroidisseur (1) est relié, du côté d'entrée, à un mécanisme élévateur-puiseur (5).

11. Système selon la revendication 6, caractérisé en ce que l'auge de décrassage est pressée, pendant le prélèvement de crasses, contre le capot (6) et en particulier l'installation de celui-ci, en vue de la liaison étanche avec l'auge de décrassage.

12. Système selon la revendication 6, caractérisé en ce que le tube refroidisseur (1) présente un cône d'entrée dans la direction de transport des crasses.

13. Système selon la revendication 6, caractérisé en ce que le tube refroidisseur (1) est rigidement relié au broyeur autogène (2) et présente, avec celui-ci, une commande commune.

14. Système selon la revendication 6, caractéricé en ce que le broyeur autogène (2) comporte, dans son prolongement, une tubulure coaxiale d'évacuation, realisée en tant que station de criblage (7) et d'un diamètre plus faible que le broyeur autogène (2).

15. Système selon la revendication 6, caractérisé en ce qu'une aspiration de poussières (11) est raccordée à la station de criblage (9).

Fig.1

Fig. 2

1